# EUROPEAN PATENT SPECIFICATION

(11) **EP 4 152 119 B1**
(45) Date of publication and mention of the grant of the patent: **12.06.2024**
(21) Application number: 21197054.6
(22) Date of filing: 16.09.2021
(51) Int. Cl.: G05D 1/00, G08G 5/04

(54) **COLLISION AVOIDANCE**
KOLLISIONSVERMEIDUNG
ÉVITEMENT DE COLLISION

(43) Date of publication of application: 22.03.2023
(73) Proprietor: Nokia Technologies Oy, 02610 Espoo (FI)
(72) Inventor: SUVITIE, Arto Kristian, 00930 Helsinki (FI)
(74) Representative: Laine IP Oy

(56) References cited:
- EP-A2- 2 444 274
- XU F ET AL: "Concepts for dynamic obstacle avoidance and their extended application in underground navigation", ROBOTICS AND AUTONOMOUS SYSTEMS, ELSEVIER BV, AMSTERDAM, NL, vol. 42, no. 1, 31 January 2003 (2003-01-31), pages 1-15, XP004400426, ISSN: 0921-8890, DOI: 10.1016/S0921-8890(02)00323-8

## Description

### FIELD

The present disclosure relates to vehicular navigation and avoiding collisions with objects.

### BACKGROUND

Piloting airborne drones, which are unmanned aerial vehicles, UAVs, presents with some challenges as drones may have a mass of several kilograms and their velocity may be fairly high, presenting a danger of damage in case of collision. Drones may collide with objects, such as other drones, aircraft, birds, humans, cars or buildings, for example.

A vehicle, a drone, or a robot for example may be piloted by a human operator or by algorithms which are at least partially autonomous. When the vehicle is at least in part autonomous, the dependability of the algorithms in avoiding collisions becomes a question of public safety.

Airborne drones are increasingly used to obtain imaging data and to deliver items via air. For example, vaccines have been delivered by drone to avoid congested roads, or to remote villages in cases where roads do not even exist.

Document EP2444274 A2 discloses an electronic vehicle controlling method, wherein an electric wheelchair has an obstacle sensor to detect an obstacle near the wheelchair, and a virtual repulsive force is calculated to move a body of the wheelchair away from the obstacle. Document "Concepts for dynamic obstacle avoidance and their extended application in underground navigation", by XU F et al., Robotics and Autonomous Systems, Elsevier BV, Amsterdam, vol. 1, no. 1, 31.1.2003, ISSN:0921-8890, discloses a dynamic obstacle avoidance scheme for mobile robots, wherein a local polar object chart is determined for defining ways out of a location for the mobile robot, and the environment is classified into possible-way-out and no-way-out sectors.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments.

According to a first aspect of the present disclosure, there is provided an apparatus comprising at least one processing core, at least one memory including computer program code, the at least one memory and the computer program code being configured to, with the at least one processing core, cause the apparatus at least to obtain range finding data comprising a distance and a direction to at least one object within a predetermined observation area in a direction of movement of a vehicle, at least a part of the observation area being subdivided into one or more subsets, classify at least one of the at least one detected object into one of the one or more subsets, the one or more subsets being adjacent to a trajectory of the vehicle, and determine whether a command to change the direction the vehicle is moving on will cause the vehicle to traverse a subset of the predetermined observation area into which one or more of the at least one detected object has been classified.

According to a second aspect of the present disclosure, there is provided a method comprising, obtaining range finding data comprising a distance and a direction to at least one object within a predetermined observation area in a direction of movement of a vehicle, at least a part of the observation area being subdivided into one or more subsets, classifying at least one of the at least one detected object into one of the one or more subsets, the one or more subsets being adjacent to a trajectory of the vehicle, and determining whether a command to change the direction the vehicle is moving on will cause the vehicle to traverse a subset of the predetermined observation area into which one or more of the at least one detected object has been classified.

According to a third aspect of the present disclosure, there is provided an apparatus comprising means for obtaining range finding data comprising a distance and a direction to at least one object within a predetermined observation area in a direction of movement of a vehicle, at least a part of the observation area being subdivided into one or more subsets, classifying at least one of the at least one detected object into one of the one or more subsets, the one or more subsets being adjacent to a trajectory of the vehicle, and determining whether a command to change the direction the vehicle is moving on will cause the vehicle to traverse a subset of the predetermined observation area into which one or more of the at least one detected object has been classified.

According to a forth aspect of the present disclosure, there is provided a non-transitory computer readable medium having stored thereon a set of computer readable instructions that, when executed by at least one processor, cause an apparatus to obtain range finding data comprising a distance and a direction to at least one object within a predetermined observation area in a direction of movement of a vehicle, at least a part of the observation area being subdivided into one or more subsets, classify at least one of the at least one detected object into one of the one or more subsets, the one or more subsets being adjacent to a trajectory of the vehicle, and determine whether a command to change the direction the vehicle is moving on will cause the vehicle to traverse a subset of the predetermined observation area into which one or more of the at least one detected object has been classified.

According to a fifth aspect of the present disclosure, there is provided computer program configured to cause an apparatus to perform the following, when run to obtain range finding data comprising a distance and a direction to at least one object within a predetermined observation area in a direction of movement of a vehicle, at least a part of the observation area being subdivided into one or more subsets, classify at least one of the at least one detected object into one of the one or more subsets, the one or more subsets being adjacent to a trajectory of the vehicle, and determine whether a command to change the direction the vehicle is moving on will cause the vehicle to traverse a subset of the predetermined observation area into which one or more of the at least one detected object has been classified.

A method herein can be a computer-implemented method.

### BRIEF DESCRIPTION OF THE DRAWINGS

FIGURE 1 illustrates an example system in accordance with at least some embodiments;
FIGURE 2A illustrates an example system in accordance with at least some embodiments;
FIGURE 2B illustrates an example system in accordance with at least some embodiments;
FIGURE 2C illustrates an example system in accordance with at least some embodiments;
FIGURE 2D illustrates an example system in accordance with at least some embodiments;
FIGURE 3 illustrates an example apparatus capable of supporting at least some embodiments;
FIGURE 4 illustrates signalling in accordance with at least some embodiments, and
FIGURE 5 is a flow graph of a method in accordance with at least some embodiments.

### EMBODIMENTS

Vehicular navigation seeks to avoid collisions with objects. A vehicle may comprise an airborne drone, a pilotless aircraft, a robot, or a car, for example. Ranging, or range finding, as an example of a sensor, is a mechanism to obtain information of distances and directional angles to objects, such as objects in moving direction of a vehicle. Examples of range finding devices include lidar, radar, sonar, sodar and ultrasonic devices. The principles of the range finding devices in distance measurement comprise that the distance between the sensor and the object is calculated by comparing the time the pulse left the device to the time a return signal is received from an object. Methods are disclosed herein to enable vehicular navigation which enables avoidance of objects with a moderate processing load. When such processing takes place in a processing substrate separate from the vehicle, the processing substrate may handle navigation, steering and/or guiding of a larger number of vehicles as the processing load per vehicle is lighter, for example.

In some examples, objects are classified into sectors, those being observation area subsets, adjacent to a current trajectory illustrating a movement along the planned path of the vehicle to enable validating, whether a change in trajectory or moving direction of the vehicle would present a risk of collision.

For instance, the route, path and waypoints thereof are displayed overlaid on a map, a grid, a coordinate system, and/or the like, and a user may drag (e.g., virtually) a waypoint of the route along the digital map, grid, coordinate system, and/or the like to relocate the waypoint, for example. The vehicle and progress of the movement of the vehicle, location of the object, and/or other desired map markings may be displayed also on the display.

In some examples moving direction may comprise moving forward, moving rearward, moving left, moving right or any direction between these. The moving direction and the range finding device are directed usually to the same direction.

In some examples the observation area of the range finding device is facing towards the moving direction of the vehicle.

In some examples, a path planning involves a process of finding conflict-free paths between a starting point (e.g., vehicle's current location) and an ending point (e.g. home location, or other location). Output of a path planning algorithm typically includes detailed paths for a vehicle to avoid collisions. In a travel setting, for example, in which the vehicle is expected to autonomously, semi-autonomously, or by communicating with a remote controller, or any combination thereof navigate, it is difficult to provide guidance in case of a risk of collision, as a risk of collision may occur surprisingly. Avoiding a collision, a vehicle needs to stop before continuing and/or use a different guidance than according to the planned path during the travel. Additional sensor information of objects through one or more sensors such as range finding devices, for example, in a path, (e.g. in a path ahead and in-front of the vehicle), and surroundings of a path (e.g. adjacent to the path), may be provided before or during the travel. The sensor information may be classified as the information relating to the path, (e.g. the path ahead and/or in-front of the vehicle), and surroundings of a path (e.g. adjacent to the path), or at least parts thereof. As used herein, a "path" comprises at least an intermediate point or location on a path (e.g., a route, a path between the starting point and the ending point) and can follow a road, a lane, a laneway, a trajectory or any parts of the path. The vehicle needs for safe travel some margins which are taken into account in path planning. As used herein, a "surroundings of the path" comprises area or space surrounded of the path or adjacent to the path, or any parts of the surroundings of the path. Furthermore the "surroundings of the path" may be divided in further parts, where a detected object can be classified.

In further examples the detected objects are classified into the sectors, which are adjacent to the current trajectory of the vehicle, enable the validation of commands to change the planned path of the vehicle into a new, different direction from the current trajectory to verify the vehicle will not collide with the detected objects. For example, in some implementations, the closest detected object in the sector may be checked in the validation to conserve processing power. Information on detected objects may be kept in a sector-specific buffer memory, or a memory, until the vehicle has passed the object, to enable avoidance of the detected objects which are no longer in a range finding device view but which still pose a risk of collision in case the trajectory changes.

In some examples, the range finding device view may comprise different shapes of the observation area like cone in a solid angle case, one or more portions within the cone of the solid angle, or shapes determined by different suitable geometrical graphs, or lidar beams, for example. The lidar beams may be within the solid angle wherein the furthermost angle between the extreme lidar beams may be the same as of the apex of the solid angle, for example.

In some examples, the data of the detected and classified object in the sector may comprise a distance and/or direction from the trajectory, an allowed movement of the vehicle towards the detected and classified object, for example. The allowed movement of the vehicle towards the detected and classified object may further comprise one or more indications. The one or more indications may comprise a distance from the trajectory, which distance may comprise a value how much the vehicle can move before the vehicle need to stop. The one or more indications may relate to continue the current trajectory, as a short movement is allowed (defined e.g. by a suitable safety margin), or discontinue the current trajectory. Further the one or more indications may provide information about use of at least one of the return home plan, wait for a re-planned path, a re-planned path, or a re-plan the path.

In some examples field of view of observation area may vary based on a speed of the vehicle (e.g. a solid angle), e.g. when speeding up the speed then a smaller angle or apex may be used, or vice versa, when slowing the speed then a bigger angle may be used.

In further example the detected object is a moving object and two consecutive measurements will determine that the moving object will disappear from the sector before the time which is earlier than an expected time the vehicle passes the moving object, then the vehicle may remove information concerning the moving object from the memory. This clears information from memory earlier, conserving memory space.

In an example, a vehicle management environment includes a geographic region within which one or more unmanned aerial vehicles, UAVs, is/are operating. A UAV is an example of a vehicle as disclosed herein. The vehicle management environment also includes a vehicle management system configured to support vehicle management functions for supporting management of the UAV(s). The vehicle management environment includes a communication network configured to support communications between the UAV(s) and the vehicle management system. The vehicle management environment may include various other elements configured for supporting the management of the UAV(s) using the vehicle management system. The geographic region may include any geographic region within which the UAV(s) may operate. The geographic region may be relatively small (e.g., a single building or group of buildings, within a single city block, within a suburban neighbourhood, or the like) or relatively large (e.g., covering all or part of a country, covering all or part of a continent, worldwide, or the like), as well as any suitable scope in between.

The UAV(s) may include any unmanned aerial vehicles for which vehicle management functions may be performed. The UAV(s) may be configured to move in three dimensions (namely, latitude, longitude, and altitude) with various speeds and types of maneuverability. The UAV(s) may be configured to move based on pre-set flight patterns, paths, or routes based on active control by computers or end users (e.g., based on commands received by the UAV(s) 110 via the vehicle management system), or the like, as well as various combinations thereof. The UAV(s) may include various devices configured to collect information to be provided to the vehicle management system, such as a global navigation satellite system (GNSS), for example a global positioning system, GPS, devices (e.g., GPS, Assisted-GPS, or the like) for determining locations of the UAV(s) , sensors (e.g., altimeters, barometers, or the like) for measuring altitudes of the UAV(s) , proximity sensors for measuring proximity of the UAV(s), cameras for capturing images or videos from the perspective of the UAV(s) , or the like, as well as various combinations thereof. The UAV(s) are communicatively connected to the vehicle management system for enabling the vehicle management system to support management of the UAV(s) (e.g., receiving real-time status information from the UAV(s) (e.g., latitude, longitude, altitude, trajectory, battery status, mission status, obstacle or object information or the like, as well as various combinations thereof), sending flight control commands or other commands to the UAV(s), or the like, as well as various combinations thereof). The flight control commands may be used to instruct the UAV(s) to change trajectory. The UAV(s) may be configured to support various types of wireless communication protocols for communicating with the vehicle management system, such as a cellular or non-cellular communication protocol. For example, the UAV(s) may include winged drones, helicopter drones, quadcopter drones, or the like.

The vehicle management system is configured to support various vehicle management functions for supporting management of the UAV(s). The vehicle management system may be configured to communicate with the UAV(s) for purposes of obtaining status information associated with the UAV(s) (e.g., flight tracking information, battery status information, mission status information, risk of collision information, alert of a risk of collision information, position information, location information, object detection, object information, the position or location of the object information, or the like), sending commands for controlling the UAV(s) (e.g., for controlling the flight of the UAV(s) , for controlling mission related functions performed by the UAV(s) , for saving or ignoring of the object information, for using saved object in the flight, for changing the flight path based on the saved object or the like, as well as various combinations thereof, or the like, as well as various combinations thereof. The vehicle management system may be configured to support management of the UAV(s) by receiving management information related to the management of the UAV(s) . The vehicle management system may be configured to support management of the UAV(s) using vehicle management functions (e.g., vehicle management information collection functions, for example about object information, vehicle management control functions, or the like) and user interface presentation and control functions, where applicable. The vehicle management system may support a vehicle management application configured to support management of the UAV(s) . The vehicle management system support various other functions and capabilities for supporting management of the UAV(s) .

The vehicle management system may be implemented in various ways. For example, the vehicle management system may be an end user device, a server, a ground control station, a combination of a vehicle management controller and an end user device, or the like, or any combination thereof.

In at least some embodiments in which the vehicle management system is an end user device, the vehicle management functions and the control functions may be integrated within the end user device. In such embodiments, a user interface configured for managing the UAV(s) may be generated by the vehicle management functions and rendered via one or more display interfaces of the end user device by the user interface presentation and control functions.

In at least some embodiments in which the vehicle management system is a combination of a vehicle management controller and an end user device, the vehicle management functions may be provided by the vehicle management controller and the user interface presentation and control functions may be provided by the end user device. In such embodiments, user interface configured for managing the UAV(s) may be generated by the vehicle management controller using the vehicle management functions and provided to the end user device for rendering at the end user device via one or more display interfaces of the end user device by the user interface presentation and control functions. The user interface configured for managing the UAV(s) may be provided from the vehicle management controller to the end user device via any suitable communication channel (e.g., via one or more communication networks, such as communication network). The end user device may be running the vehicle management application configured to support management of the UAV(s) via interaction with the vehicle management controller. For example, the vehicle management controller may be a network server or other suitable device (e.g., a ground control station) and the end user device may be a smartphone, a tablet computer, a laptop computer, or other suitable device. It will be appreciated that, in at least some such embodiments, the vehicle management controller may be configured to support multiple end user devices.

In at least some such embodiments, as discussed above, the end user device may be configured to run the vehicle management application which is associated with the vehicle management system and which is configured to support various functions for supporting management of the UAV(s). The vehicle management application is configured to support various vehicle management functions for supporting management of the UAV(s) (e.g., obtaining and presenting status information associated with the UAV(s) (e.g., flight tracking information, battery status information, mission status information, risk of collision information, alert of risk of collision information, position information, location information, object detection, object information, the position or location of the object information, or the like), controlling the flight of UAV(s), or the like, as well as various combinations thereof). The vehicle management application is configured to support various vehicle management functions for supporting management of the UAVs based on use of user interfaces, where the vehicle management application may support various user interfaces configured to support presentation of and interaction with various information and controls associated with supporting management of the UAV(s). Alert maybe generated relating to risk of collision information, for example.

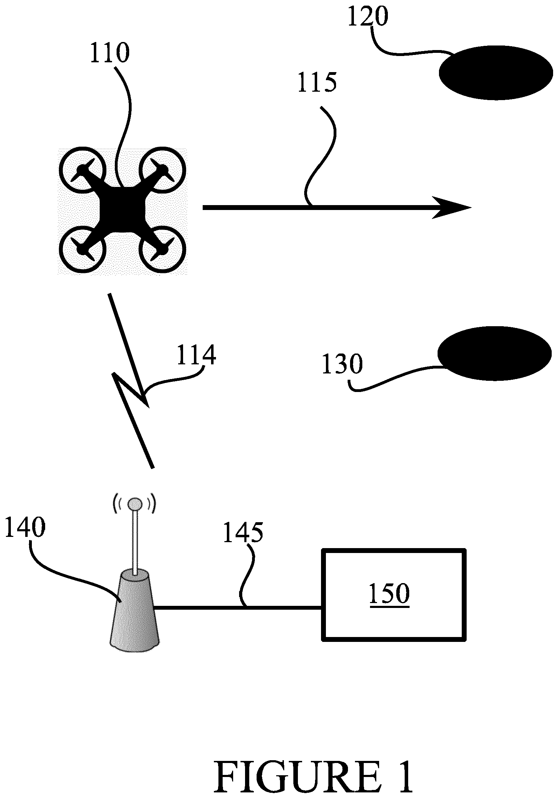

FIGURE 1 illustrates an example system in accordance with at least some embodiments relating to UAV, for example. A vehicle 110 moves in a linear manner in a direction defined by velocity vector 115. For example, by flying in a linear manner it is meant that the vehicle 110 is not in the process of turning to another heading, or direction, or in the process of changing its altitude. In the waypoint a change of direction may occur and also the velocity vector may change. The vehicle 110 may comprise an unmanned aerial vehicle, such as a drone, for example. Other alternatives include an autonomous forklift, a robot, or an at least partially autonomous or semi-autonomous car, or a fully autonomous vehicle.

The vehicle 110 is depicted as including various components. It will be appreciated that, although discarded from FIGURE 1 for purposes of clarity, a vehicle, such as a drone, typically includes a frame, propellers, motors, a battery, a memory, and a GPS module, sensors among other components. The vehicle 110 may include at least one of a flight controller, an onboard computer, a modem, a backup radio receiver, a payload device, and a payload gimbal. Other components may be present. In other vehicles some different components or applications may be used. Furthermore, the vehicle 110 has a range finding device, such as one or more of a lidar, a radar, a sonar, a sodar or an ultrasonic device, provided on or in the vehicle as a payload, for example. Advantages of the lidar and radar include long range. The range finding device produces range finding data describing a distance and a direction to each detected object within a predetermined observation area in front of the moving direction of the vehicle 110. For example, the range finding device may be attached to, or comprised in, the vehicle 110 and point toward the direction where the vehicle 110 moves. A logic is configured for storing the detected object.

A flight controller of the UAV may remotely wirelessly control the vehicle 110. The flight controller is connected to the on-board computer for control messages. The flight controller is connected to the backup radio receiver which can be used as backup control method (enabling control over vehicle 110 using a traditional radio controller in case a connection via the wireless modem is lost for some reason). The flight controller may also be connected to payload gimbal.

The onboard computer includes software that is configured to make the system work. The onboard computer connects the flight controller to the ground control station or server 150 via a wireless telecom connection, such as LTE, or any suitable connection for example, using the modem. The onboard computer may provide access to payload data from a payload device, where vehicle 110 has a payload device. A payload device may comprise a video camera, for example. The onboard computer may store delay-sensitive logic in order to ensure responsiveness. Vehicle such as UAV 110 may include a flight controller, the onboard computer, a modem, a backup radio receiver, a payload device, and/or a payload gimbal.

The range finding data may comprise, for example, data or a list of objects detected, and for each object the distance between the vehicle 110 and the object, and a direction where the object is with regard to the vehicle 110, and/or outer dimensions of the object calculated from the data relating to the object, or any combination thereof. The direction may be expressed, for example, in terms of angles with respect to velocity vector 115. The angles may comprise an elevation angle and an azimuthal angle, for example, wherein the elevation angle is an angle to the object from a horizontal plane where the vehicle 110 and the velocity vector 115 lie, and the azimuthal angle is an angle to the object from a vertical plane where a centre of the vehicle 110 and the velocity vector 115 are. The direction may be defined in different ways as well, for example in terms of components of a normalized vector pointing toward the object from the vehicle 110. A further example is a two-dimensional coordinate expression on the predetermined observation area.

In the arrangement illustrated in FIGURE 1, the vehicle 110 is going to traverse a space between objects 120 and 130, wherefore the trajectory 115 is clear of objects preventing the vehicle's movement. On the other hand, should the vehicle 110 change direction it might collide with one of objects 120, 130. The objects may be classified into directional sectors starting from the vehicle 110 to characterize their location compared to the present trajectory of motion of the vehicle. Commands to change the vehicle's direction of movement may then be pre-checked to ensure the vehicle is not steered to collide with one of the objects 120, 130. The planned path may be maintained, changed, or the vehicle stopped on the basis of the information obtained from the validation

The range finding data may be analysed on board in vehicle 110, in a computing device comprised in the vehicle, and/or it may be analysed in a different computing device, such as a server 150, and/or a ground control station for example. In case the range finding data is analysed in the ground control station or server 150, it may be provided from the vehicle 110 to the ground control station or server 150 via a wireless link 114 and base node 140. The ground control station or server 150 may be a cloud, or an edge server using Multi-access Edge Computing (MEC) of 5G which enables cloud computing to be done at the edge of a mobile network, for example. An advantage of using a ground control station or server 150 is increased processing capability, while an advantage of onboard processing is that communication delays associated with the wireless link 114 and base node 140 are avoided. In some embodiments, the server 150, and/or ground control station is a UAV controller node. In some examples, the vehicle is configured to transmit the closest detected object data towards the vehicle in the surroundings to the ground control station or server.

In some examples, the vehicle is stopped if the object in moving direction is detected to prevent the trajectory or the planned path by using the on-board computer. An alert of the finding may be sent to a server or a ground control station in vehicle management system, for example. Before the object preventing the flight in planned path has been detected the vehicle may have detected other objects in the other sectors or subsets. The data of the detected other objects closest towards the vehicle in the respective specific sector or subset have been stored in sector-specific buffer memory, or a memory of the vehicle. When starting re-planning of the path around the obstacle detected in the trajectory segment, the stored data of location of objects classified in the specific subset may be used in re-planning so that the use of the object in the location of the subset can be discarded in a calculation of the re-planning as possible part of a path. In re-planning the at least one closest one of the classified objects stored in the memory is used as obstacle to avoid in path calculation. Less calculation and/or faster communication are achieved.

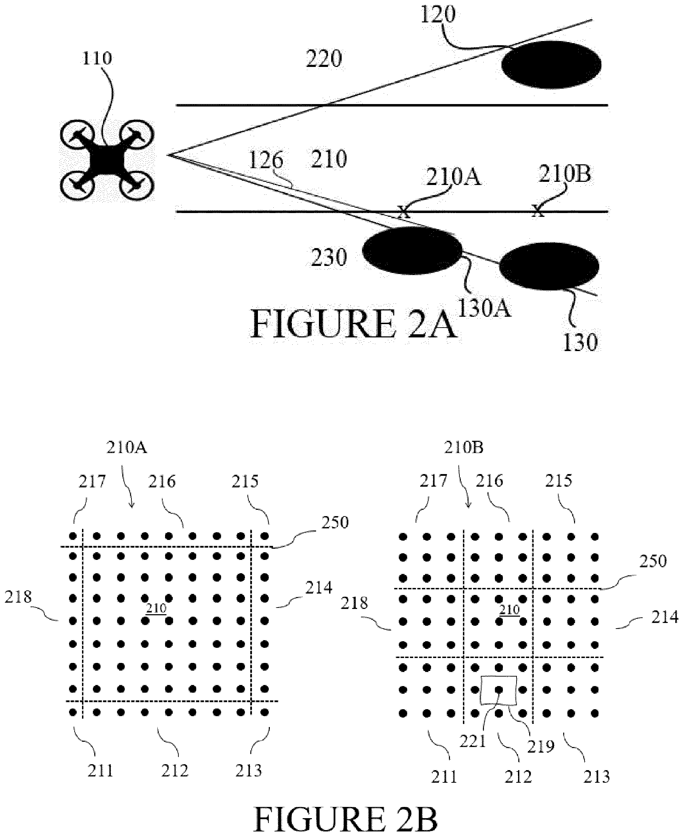

Some examples of objects in some sectors are illustrated in FIGURE 2A, for example.

For example, the object 120 may be detected above the vehicle's trajectory and the object may be tracked as the most recent object (the object saved in the memory) above the vehicle, then it will be checked before the vehicle can ascend, in case the vehicle need to continue after collision prevention logic or the vehicle is stopped, for example.

If the object is tracked as the closest active object (which is detected as closest object by lidar, for example) in the sector of the observation area during the travel, the object is configured to be actively monitored in case the vehicle need to change moving direction. If the other object is detected in the same sector and it is further away from the vehicle than the object, the other object is configured to be ignored since the closer object has been detected in the same sector. The other object may be started to be monitored after the vehicle has passed the earlier object and if the other object will be detected in the observation area of the range finding device.

Below the trajectory segment or subset, wherein an object is closer to the vehicle than other object the object may be detected below the trajectory segment and the other object may be tracked as the most recent object below the vehicle, then the other object will be checked before the vehicle can descend. If the other object has detected below the trajectory segment and it is further away from the vehicle than the object, the other object is configured to be ignored since the closer object has been detected in the same sector of the observation area.

In some embodiments, processing may be split between on board processing and ground control station or server processing such that the classifying of objects into sectors, or observation area subsets, is performed in a ground control station or server, and vehicle navigation commands are pre-checked for a risk of collision on board in the vehicle. However, split may depend on the latency of communication between the entities needed. A stop message may be processed by on-board processor in the vehicle as the latency may be too long to communicate with the ground control station or server so that the vehicle can be stopped without delay. The on-board processor may however inform by a message that the object is detected in the moving direction of the vehicle. In some further example a command for a new path plan or a change of the current plan may be sent to the ground control station or server with the potential observation area sector data. After the message has been received by the ground control station or server, a path planning entity, or the vehicle management system the re-planning will be started taking into consideration the observation area sector data.

It is possible for a vehicle to make slight adjustments to a path in real time, maintaining the original trajectory as much as possible while avoiding objects that pose risks of collision using any suitable methods, even though the detected object is in the trajectory segment or adjacent to the trajectory segment. Diversion to a direction opposite to the detected object is suitable. For example, in case an object is on the left-hand side of the current trajectory segment, the vehicle may slightly swerve to the right to avoid the object. In such cases, a maximum offset may be defined such that in case the vehicle would deviate from the original trajectory by more than the maximum offset, it may stop and wait for instructions from a human pilot, for example. Once the object is successfully avoided, the vehicle may return to the original trajectory or continue straight toward a next waypoint. Whether to return to the original trajectory may depend on configuration or terrain type, for example. If terrain is open, proceeding straight to the next waypoint of the current path may be suitable, while in a closed terrain with several obstacles, return to the original trajectory may be not be suitable.

Example of maximum offset may be determined according to the path and vehicle. For example, if there is an object one or more meters from the planned path, then the maximum offset is less than that to avoid colliding the object. Otherwise the offset can be determined according to the situation and user preference or a suitable default value can be determined by testing in advance. In some vehicles or path planning a safety margin may decide the possible allowed deviations without a need to start re-planning.

If a vehicle detects obstacles in many places in the direction of the trajectory so that navigating around the obstacles appears difficult, navigation may be returned to a human pilot. The vehicle may stop until human control is re-established. A path re-planning may be starting from the stopping place of the vehicle, or from location the vehicle has returned.

FIGURE 2A illustrates an example system in accordance with at least some embodiments. The vehicle 110, which corresponds to the vehicle 110 of FIGURE 1, is on a trajectory advancing horizontally from the left toward the right. The horizontal bars define a trajectory segment 210 which the vehicle 110 will traverse in case its direction does not change, corresponding to a planned path or parts of it. An above-segment 220 lies above the trajectory segment 210, and a below-segment 230 lies below the trajectory segment. FIGURE 2A therefore is a side view of a vehicle 110 in motion along the trajectory segment 210. Two distances from the vehicle 110, a distance 210A and a distance 210B, are marked in FIGURE 2A. As long as the vehicle's trajectory is unchanged, objects in above-segment 220 and below-segment 230, such as an object 120 in above-segment 220 and an object 130 in below-segment 230, do not pose a risk of collision. An object 130A is a closest object in the below-segment 230 and will be stored. Storing information on an object 130 may be discarded as it is in longer distance from the object. Storing may occur in case the location data of both objects shows that the distance between the objects is short based on velocity of the vehicle, for example. In the above-segment 220, the object 120 is closest and may be identified by storing information concerning it in a memory. In some examples, an intersection point of a line 126 (beam for example) with the object 130A indicates another dimension of the object 130A which may be used as a part of an approximation of a dimension or size of the object 130A.

In some examples, the apparatus is possible to be configured to separately classify objects in two distance ranges 210A, 210B into two groups of the subsets, such that in a farther-away distance range of the two distance ranges 210A, 210B, the trajectory 210 of the observation area covers a smaller portion of the observation area than in a distance range nearer to the vehicle from among the two distance ranges 210A, 210B. The number of distance ranges are not limited to two, but other number of distance ranges can be used.

In some examples, the central part is depicting a centre of the trajectory. The trajectory may be part of the observation area which is restricted e.g. by at least one of lane lines which extend to a direction of movement of the vehicle, path space, width allowing collision-free movement of the vehicle, or any combination thereof.

Furthermore, in case the vehicle 110 has detected an object in the trajectory segment 210 such that if the vehicle continues along its present planned path a collision would occur. If in this situation another object is located in the below-segment 230, above where the vehicle stops to avoid the collision if continued in the current trajectory, then the collision with the object in the below-segment 230 may be avoided by providing a command to change the planned path 210 toward one of the above-segment 220, the left-side segment 218 or the right-side segment 214, or one of 211, 213, 215 or 217 illustrated in FIGURE 2B.

FIGURE 2B illustrates an example system in accordance with at least some embodiments. FIGURE 2B is a view from the perspective of the vehicle 110 in motion along the trajectory segment 210. The part of FIGURE 2B labelled 210A, on the left, corresponds to a view from the moving direction of the vehicle 110 at distance 210A from the vehicle. Moving direction may comprise view of a front of the vehicle described by an observation area. The part of FIGURE 2B labelled 210B, on the right, corresponds to a view from the moving direction of the vehicle 110 at distance 210B. An observation area is schematically denoted using black dots representing a division of dots of lidar beams at the distances 210A and 210B from the vehicle, these black dots covering a predetermined observation area in a moving direction of the vehicle 110, from the point of view of the vehicle 110. The scales of 210A and 210B are different. In 210A more dots of beams are located within the trajectory segment 210 than in 210B.

At the distance 210A and 210B, the trajectory segment 210 covers observation area within a rectangle defined by four dotted lines 250 and the intersection points of the dotted lines depicting the corners of the rectangle. Segments, or subsets outside the dotted lines 250 of the observation area are depicted as the right-segment 214, left-segment 218, as well as the above-segment 216 and below-segment 212. Further 211, 213, 215 and 217 are corner segments separated by the extending end parts of the dotted lines 250 from the corners of the rectangle. Each of the segments 211, 212, 213, 214, 215, 216, 217 and 218 thus represents the overall predetermined observation area, even though the different size or shape of 201A and 210B may be provided. Additionally, sometimes corner segments 211, 213, 215 and 217 are referred as joint segments with segments 212, 214, 216 and 218, respectively. In the example of FIGURE 2A and FIGURE 2B, each part of the observation area which is not in the trajectory 210 is in one subset 211-218, for example the above-segment 216 comprises the element 216 of the observation area. The subsets 211-218 are adjacent to the trajectory 210 and represent potential places where an object can be classified. The classification of the detected objects will be taken into account when the travel direction of vehicle changes. The predetermined observation area may be defined as a field-of-view of the range finding device of the vehicle 110, for example. When the vehicle 110 travels linearly, the velocity vector 115 points to the centre of the trajectory 210.

In some examples in FIGURE 2A and FIGURE 2B the dots of beams illustrate how the beams are spread in a field-of view of the range finding device at the predetermined observation area in the different distances 210A and 210B. The dots of beams are arranged to belong to the trajectory segment or to plurality of subsets outside the trajectory segment. In distance 210A most of the beams are depicted in the trajectory segment, as the distance to the vehicle or range finding device is shorter, for example. In distance 210B most of the beams are depicted in plurality of the subsets, as the distance to the vehicle is longer and the beams are longer from each other, for example.

In further examples the location data of the detected object found in the dot may comprise location data in coordinates. The dotted lines dividing the view in segments may be also determined by coordinates. The segments 211 - 218 may be of different size based on the needs.

The field-of view is the extent of the observable area that the optical instrument has observed at any given moment.

In some examples field-of-view may vary based on speed of vehicle, with a +15 to -15 degree, or other degrees, for example.

In the object detection method, there might be different number of beams which are spaced and directed a predefined number of degrees apart each other within the observation area. The object or one or more parts of the object may be detected by a beam. The same beam may provide location data of the detected object in different distances between the vehicle and the detected object, for example. The detected object or one or more parts of the object may be represented by location data. Depending on the location data the object or the parts of the object may be detected within trajectory segment or outside trajectory segment. The object or the parts of the object being outside trajectory segment are classified into one or more segments or sectors 211 to 218. When vehicle continues its planned path, further location data of objects or parts of objects either from new or same objects in the outside trajectory segment may be detected. The observation area and the classified subsets may be based on the vehicle type, for example.

In some examples the location data of the object or the parts of the object may be determined to relate to the same object when the location data between the objects or the parts of the object are detected within a close distance of each measurement. Close distance may be defined using a distance between the previous location data of the detected object and the next location data of the detected object, for example.

In one further example, the distances between the measurements that have been carried may be based on the needs, the velocity of the vehicle, for example. Further, the measurements may be performed intermittently or periodically, for example.

In some examples, number of beams used may differ. In FIGURES 2A and 2B the beams can be of predetermined degrees apart, for example. When an object is detected by a single beam at distance 210B, additional location data may be added to the received location data from the single beam, if the adjacent beams around the single beam have not detected an object in the same distance from the vehicle. A space of the additional location data around the location data provided by the single beam will be determined by using the distance of detected object location data measurement of the single beam, angle of one or more other adjacent beams around the single beam, for example. The space will be then used as dimension, or size of the object and probably may be as a maximum object size depicted by 219 in 210B of FIGURE 2B to be observed in navigation, steering and/or guiding of the vehicle. However, also at least the location data received in adjacent distances between the measurements may be used to determine the size of the object. While the single beam is used as an example, the location data of the dots of two or more beams can be combined. An additional space around the combined location data may be added towards the adjacent beams which have not detected the object, for example.

The number of dots of beams relating to the object may vary. A plurality of the dots may represent the existence or appearance of the location of the detected object.

Upon detection of an object in the range finding data, the object may be classified into one of the subsets, in case it is not in the trajectory 210. In case the object is in the trajectory 210, a collision with the object is predicted and the vehicle will have to stop or change direction to avoid the collision. An alert may be provided to warn of a risk of collision. The alert may comprise additionally a warning of a risk of collision relating to an existence of one or more detected object in one or more segments outside the trajectory segment, for example.

To classify the detected object into one of the subsets, the division of the predetermined observation area into the trajectory and the one or more subsets may be obtained for the distance at which the object is. The division may be fetched from a pre-populated table using the distance as index to the table, or it may be dynamically calculated responsive to the detection of the object. Once the division is obtained, classifying the object comprises determining which section of the observation area the object is in, and then determining which subset this section of the observation area is comprised in. For example, the object may be classified as being in the left-side segment 218 in case it appears that the vehicle is set, along its current trajectory, to move or fly right to the object.

Once one or more objects have been classified into the one or more subsets, it is possible to determine whether a command to change a direction the vehicle is moving on will cause the vehicle to traverse a subset of the observation area into which one or more of the at least one object has been classified. This amounts to validating the command. This could present a risk of collision, for example, if an object has been classified into the above-segment, then a command to cause the vehicle to start ascending changes the trajectory of the vehicle such that the trajectory segment 210 intersects where the above-segment used to be before the change in the direction. Responsive to a determination that a command would present a risk of collision, the command may be rescinded before being acted on by the vehicle. In further examples a command may comprise in addition a re-planned path.

The analysis of the range finding data, the obtaining of the subsets and classification may be performed on board in the vehicle 110, in the ground control station or server 150 of FIGURE 1, or any combination thereof, as described herein above.

Some embodiments of the invention obtain the range finding data at a single, set distance from the vehicle, such that the division into subsets of the observation area need not be obtained separately for different objects. While this is a simpler solution, its drawback is that the objects potentially posing a collision hazard are detected rigidly at the set distance. In other embodiments, a number of distances, such as two, four, eight or sixteen, are used. Each distance may in practice be a distance range about the nominal distance. When pre-defined distances are used, pre-calculated divisions of the observation area into the subsets may advantageously be used. In some examples, when the pre-defined distances are used, detected objects are allocated to the pre-defined distance nearest to the actual distance to the object.

In some embodiments, the use of plurality of the pre-defined distances may have some drawbacks effecting to battery consumption, for example. In some examples the detected object in one of the sectors 211-218 may trigger a determination of a distance view or views. That reduces the communication and memory usage.

In addition, the dots of the beams representing that the object has been detected may be illustrated in different way than the other dots of the beams in the FIGURE 2B. In FIGURE 2B, in 210B the detected object may be depicted by a dot 221, and a mask 219, for example. In the locations of other dots in sectors no object has been detected. When no objects have been detected in the sectors, the sectors can be used by the vehicle. In some examples a mask 219 is determined around the dot 221 of the beam towards adjacent beam dots which have not detected an object, for example. A mask 219 of maximum potential object size may be depicted by a rectangular, or any suitable shape, for example. That can be used as a safety margin around the dot 221.

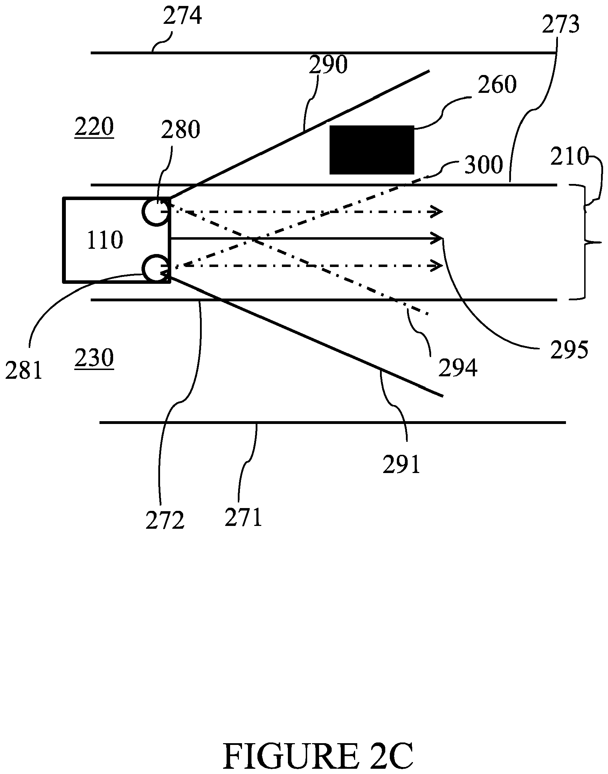

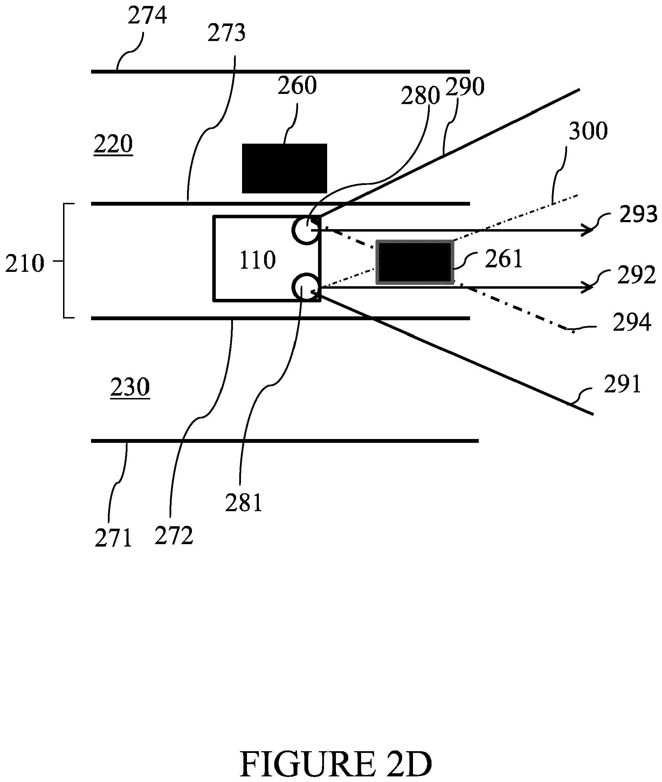

FIGURE 2C and 2D illustrate another example system in accordance with at least some embodiments. The vehicle 110, which corresponds to the vehicle 110 of FIGURE 1 as an example, is on a trajectory advancing horizontally from the left toward the right. The horizontal bars 272, 273 define the trajectory segment 210 which the vehicle 110 will traverse in case its direction does not change. An above-segment 220 lies on the left side of the trajectory segment 210, and a below-segment 230 lies on the right side of the trajectory segment 210. In the example illustrated in FIGURE 2C and 2D, the vehicle 110 comprises one or more range finding devices, for example, two range finding devices 280 and 281, pointing to the moving direction covering the predetermined observation areas between 291 and 300 as well between 294 and 290. In other examples, the one or more range finding devices 280, 281 on the vehicle may also point to other directions than the moving direction of the vehicle 110, for example, backwards relating to the moving direction. The range finding devices 280, 281 may be directed to different directions depending on the direction of the movement of the vehicle, or adding additional range finding devices to other parts of the vehicle.

The trajectory segment may be determined by using a width of road lanes, the lanes between lane markers 271, 272, 273, 274, data of the path planning, or any combination thereof.

In Figure 2C, as the vehicle 110 moves along the trajectory segment 210, the vehicle 110 detects object 260 with the range finding device 280 within the predetermined observation area. As the detected object 260 is found to be in the surroundings of the planned path, particularly in the above-segment 220, the detected object 260, with related data, may be stored in a memory for further use, and/or communicated to a remote controller, such as a ground control station, an entity or a server, for example. In FIGURE 2D, the sensor like range finding device 280, and/or 281 has detected an object 261, with related data, in front-of the vehicle when moving direction depicted by 295. The detections of the detected object 261 and the object 260 cause an analysis to be carried to solve whether, or not, the object 260 may cause a risk of collision with the detected object 261 and/or the vehicle 110. An action needs to be taken to consider, for example, whether the data may indicate whether the vehicle 110 is too close to the object 261, when the vehicle need to stop, for example to avoid a collision with the object 261, or yet far-away from the object 261 and if yet far-away to start to calculate potential re-planning paths, whether the replanning path alternative can include safe traversal before the vehicle is stopped. If a problem is detected to occur, the data of the object 260 will be taken into account in replanning of the path, for example. If no problem is detected to occur, the data of the object 260 may be ignored, and further in case the vehicle has bypassed the object 260, the object data can be deleted.

Furthermore, in some examples illustrated in FIGURE 2C and FIGURE 2D, the one or more range finding device 280, 281 detects objects while moving along the trajectory segment 210. The one or more range finding device 280, 281 may comprise different number of beams. The pointing direction of the plurality of the beams of the one or more range finding device 280, 281 may be spread within the one or more predetermined observation area/s, for example, the at least some beams may be arranged to point to the above-segment 220, below-segment 230 and trajectory segment 210, or any combination thereof. In some examples, the pointing direction of the plurality of the beams may move indefinitely within the area limited by the furthermost line of the field-of-view segment 290 and 294, as well 291 and 300. In some examples, the beams may across each other, as illustrated with dotted lines 300 in FIGURE 2C. The obtained data by the plurality of the beams may be used for classification of the detected object, for instance to determine accurate size or location of the detected object within the observation area.

In FIGURES 2C and 2D the lines 291, 292 of the respective range finding device 280, 281 are spaced apart. The data on the range finding devices 280 and 281 may be combined. In one example, the data of the beams of the range finding device 280 from line 291 towards 290 and the range finding device 281 from 292 to 293 to generate one single data about the surroundings. The combined data can be used as single range finding device data. In case objects are detected using the range finding device which are not within the preconfigured observation area, data concerning these objects may be discarded. This is so, as these objects are not on the trajectory segment of the vehicle, nor close enough to the trajectory segment to present risk of collision even if the trajectory is changed. In some embodiments, range finding data of objects classified into a specific subset is discarded in case there is already an object in the subset which is nearer than the newly detected object. In these embodiments, in case the newly detected object is nearer than the object previously classified into the subset, data of the previously classified object may be discarded, only retaining range finding data of the object closest to the vehicle. Thus, in some embodiments, the closest object per segment may be maintained.

Indications of objects classified into the subsets may be discarded after a time it takes for the vehicle to pass the objects, since after the objects have been passed they no longer pose a risk of collision. The time the indications are kept may be selected to at least approximately equal to the time it takes the vehicle to pass the object, taking into account the vehicle's velocity and the distance at which the object was detected. If the indications are kept a while longer than necessary the navigational freedom of the vehicle is slightly limited more than strictly necessary, however if they are removed before the vehicle has passed the object a risk of collision is caused since navigation is no longer limited concerning avoiding the object. For this reason, the time may be selected conservatively to be at least the estimated time needed to pass the object. The time may comprise an estimate with low speed or high speed, separately.

In some embodiments, the vehicle is configured to, or instructed, to, obtain a new range finding dataset at a frequency which depends on the velocity at which the vehicle is moving. In particular, if the vehicle moves faster, the new range finding dataset may be obtained more often than when the vehicle moves slower. This is useful, since the dataset need not be renewed unless the vehicle has moved sufficiently along its trajectory to meaningfully have new objects detectable in moving direction, or in front of it, for example.

In further example, the "unmanned aircraft system" as defined by the US Federal Aviation Administration and covers drones and the equipment (ground control station, for example) used to control them remotely, a frequency of communication of messages or size of messages may depend on speed of the control messages between drones and the equipment, reliability, or delay of the communication network, for example.

MAVLink as an example is a serial protocol used to send data and commands between vehicles and ground stations. A message regarding the detected object may be sent as a part of navigation command.

The messaging between the vehicle and the ground control station or server or other remote controller occurs in certain frequency, or intermittently. Control messages comprise commands, for example. In an example the classification of the detected object may determine the frequency of exchange of the control messages. Messages relating to the detected object may be classified to an urgency class such as mission-critical for indicating the criticality or priority of the message, classifying the message into the highest priority. If the detected objects classified in surroundings and in trajectory may lead to a risk collision, priority message type transmission may be used. Priority may be based on at least a distance between the detected object and the vehicle, for example. New cellular technologies 5G or future 6G are capable of supporting priorities with Ultra-Reliable Low-Latency Communication (URLLC) for mission-and business-critical applications.

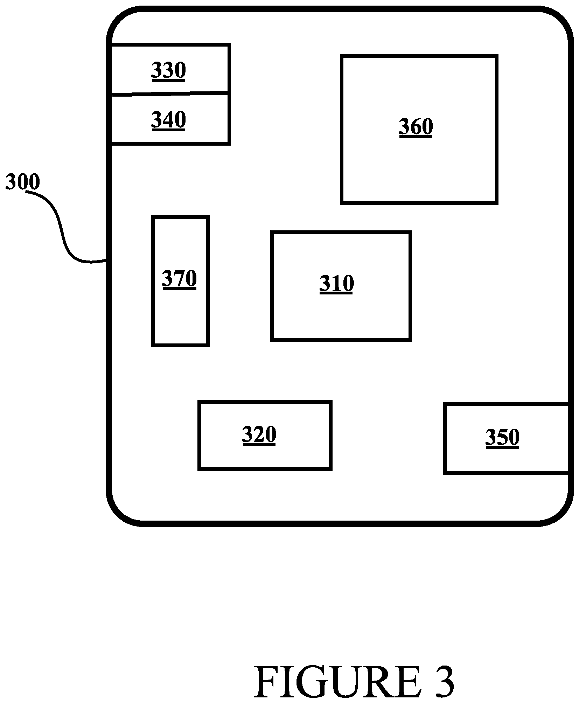

FIGURE 3 illustrates an example apparatus capable of supporting at least some embodiments. Illustrated is device 300, which may comprise, for example, a mobile communication device such as a vehicle 110, a computing device of a vehicle 110, or a ground control station or server 150, or any combination thereof, of FIGURE 1. Comprised in the device 300 is one or more processors 310, which may comprise, for example, a single- or multi-core processor wherein a single-core processor comprises one processing core and a multi-core processor comprises more than one processing core. The processor 310 may comprise, in general, a control device. The processor 310 may comprise more than one processor. The rocessor 310 may be a control device. A processing core may comprise, for example, a Cortex-A8 processing core manufactured by ARM Holdings or a Zen processing core designed by Advanced Micro Devices Corporation. The processor 310 may comprise at least one Qualcomm Snapdragon and/or Intel Atom processor. The processor 310 may comprise at least one application-specific integrated circuit, ASIC. Processor 310 may comprise at least one field-programmable gate array, FPGA. The processor 310 may be means for performing method steps in the device 300. The processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a vehicle or ground control station or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in ground control station or server, a cellular network device, or other computing or network device.

The device 300 may comprise one or more memories 320. The memory 320 may comprise random-access memory and/or permanent memory. The memory 320 may comprise at least one RAM chip. The memory 320 may comprise solid-state, magnetic, optical and/or holographic memory, for example. The memory 320 may be at least in part accessible to a processor 310. The memory 320 may be at least in part comprised in the processor 310. The memory 320 may be means for storing information. The memory 320 may comprise computer instructions that processor 310 is configured to execute. When computer instructions configured to cause the processor 310 to perform certain actions are stored in the memory 320, and the device 300 overall is configured to run under the direction of the processor 310 using computer instructions from the memory 320, the processor 310 and/or its at least one processing core may be considered to be configured to perform said certain actions. The memory 320 may be at least in part comprised in the processor 310. The memory 320 may be at least in part external to the device 300 but accessible to device 300.

The device 300 may comprise a transmitter 330. The device 300 may comprise a receiver 340. The transmitter 330 and receiver 340 may be configured to transmit and receive, respectively, information in accordance with at least one cellular or non-cellular standard. The transmitter 330 may comprise more than one transmitter. The receiver 340 may comprise more than one receiver. The transmitter 330 and/or receiver 340 may be configured to operate in accordance with global system for mobile communication, GSM, wideband code division multiple access, WCDMA, 5G, 6G, long term evolution, LTE, IS-95, wireless local area network, WLAN, Ethernet and/or worldwide interoperability for microwave access, WiMAX, standards, for example.

New technology enablers in 5G New Radio, NR, will allow devices to connect directly to one another using a technique called sidelink communications. The sidelink is a new communication method in which cellular devices are able to communicate without relaying their data via a radio access network. That means that cars, robots and even consumer gadgets could create their own ad hoc networks without using the radio access network as an intermediary. In some examples one of the vehicles can be stated as leader and the leader can operate as ground control station between other vehicles, for example.

In some examples, when vehicles are moving in a swarm or fleet, e.g. so that some of the members of the swarm are coming behind of the other, a vehicle ahead may provide location data of a detected object ahead to a neighbour or adjacent vehicle by using the sidelink communications. In some other example, the vehicles moving to the same direction in one-way, the vehicle ahead may detect an object in a lane it is moving on and the location data of the object detected by the vehicle ahead may be provided to a neighbour or adjacent vehicle coming later in its lane via the sidelink communications. Also in two-way traffic the vehicles may exchange the detected object data. The object may be detected to be in different paths of swarm vehicles, or between paths, or in a lane, or between the adjacent lanes, for example.

In some examples, the sidelink communication may be used between the vehicles in two-way streets with one or more lanes. In one example, two vehicles are moving in different directions. The vehicle may communicate over the sidelink the detected object data to other vehicle when they are passing each other. If the sidelink does not have coverage, then the data can be sent using the network elements, for example.

The device 300 may comprise a near-field communication, NFC, transceiver 350. The NFC transceiver 350 may support at least one NFC technology, such as NFC, Bluetooth, or similar technologies.

The device 300 may comprise a user interface, UI, 360. The UI 360 may comprise at least one of a display, a keyboard, a touchscreen, a vibrator arranged to signal to a user by causing the device 300 to vibrate, a speaker and a microphone. A user may be able to operate the device 300 via the UI 360, for example to accept incoming telephone calls, to originate telephone calls or video calls, to browse the Internet, to manage digital files stored in the memory 320 or on a cloud accessible via the transmitter 330 and receiver 340, or via NFC transceiver 350, and/or to play games.

The device 300 may comprise or be arranged to accept a user identity module 370. The user identity module 370 may comprise, for example, a subscriber identity module, SIM, card installable in the device 300. The user identity module 370 may comprise information identifying a subscription of a user of the device 300. The user identity module 370 may comprise cryptographic information usable to verify the identity of a user of the device 300 and/or to facilitate encryption of communicated information and billing of the user of the device 300 for communication effected via the device 300. SIM may comprise an embedded SIM (eSIM), or an integrated SIM (iSIM) for example.

The processor 310 may be furnished with a transmitter arranged to output information from the processor 310, via electrical leads internal to the device 300, to other devices comprised in the device 300. Such a transmitter may comprise a serial bus transmitter arranged to, for example, output information via at least one electrical lead to the memory 320 for storage therein. Alternatively to the serial bus, the transmitter may comprise a parallel bus transmitter. Likewise the processor 310 may comprise a receiver arranged to receive information in the processor 310, via electrical leads internal to the device 300, from other devices comprised in the device 300. Such a receiver may comprise a serial bus receiver arranged to, for example, receive information via at least one electrical lead from the receiver 340 for processing in the processor 310. Alternatively to the serial bus, the receiver may comprise a parallel bus receiver.

The device 300 may comprise further devices not illustrated in FIGURE 3. In some embodiments, the device 300 lacks at least one device described above. For example, some devices 300 may lack a NFC transceiver 350 and/or user identity module 370..

The processor 310, memory 320, transmitter 330, receiver 340, NFC transceiver 350, UI 360 and/or user identity module 370 may be interconnected by electrical leads internal to the device 300 in a multitude of different ways. For example, each of the aforementioned devices may be separately connected to a master bus internal to the device 300, to allow for the devices to exchange information. However, as the skilled person will appreciate, this is only one example and depending on the embodiment various ways of interconnecting at least two of the aforementioned devices may be selected without departing from the scope of the present invention.

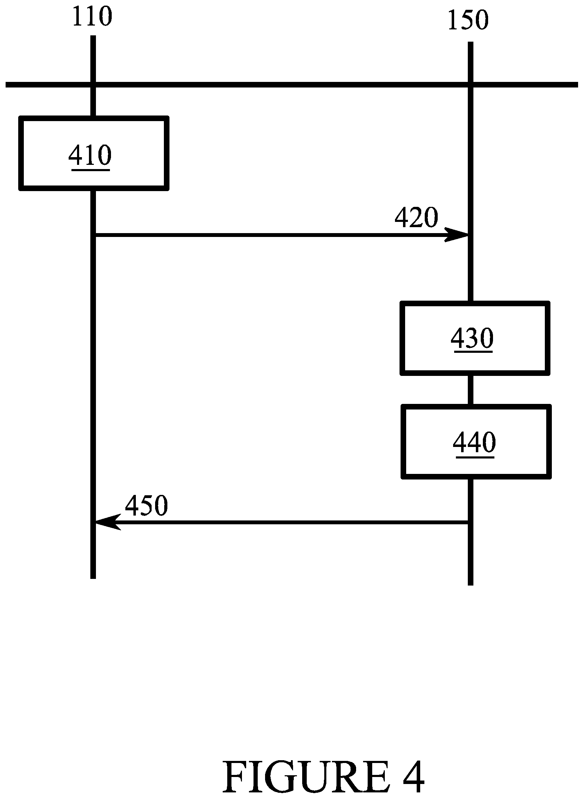

FIGURE 4 illustrates signalling in accordance with at least some embodiments. On the vertical axes are disposed, on the left, the vehicle 110 of FIGURE 1, and on the right, the ground control station or server 150 of FIGURE 1. Time advances from the top toward the bottom. The process of FIGURE 4 relates to embodiments where the processing of range finding data takes place off board the vehicle, on the ground control station or server distinct from the vehicle.

In phase 410, the vehicle 110 obtains the range finding data, which has been described herein above. The range finding data may be obtained using a range finding device in or on the vehicle 110. In phase 420, the range finding data is provided to the ground control station or server 150, for example via a base node 140, as illustrated in FIGURE 1. The range finding data may be signed by the vehicle 110, using a cryptographic key of the vehicle 110, for example, the ensure security of the process. In phase 430, the ground control station or server 150 classifies any objects in the range finding data into subsets, as described above. The ground control station or server 150 may maintain a buffer of objects classified into subsets of the vehicle 110, for example.

In phase 440, the ground control station or server 150 assesses whether a command to change the trajectory of the vehicle 110 would cause the vehicle to traverse a subset into which an object has been classified, presenting a risk of collision. In case no risk of collision is identified, the ground control station or server 150 may indicate this to the vehicle 110, phase 450. In some embodiments, the ground control station or server 150 informs the vehicle 110 of a command to change trajectory which is suppressed due to the risk of collision. The vehicle 110 may respond to such an indication by reducing its velocity, for example.

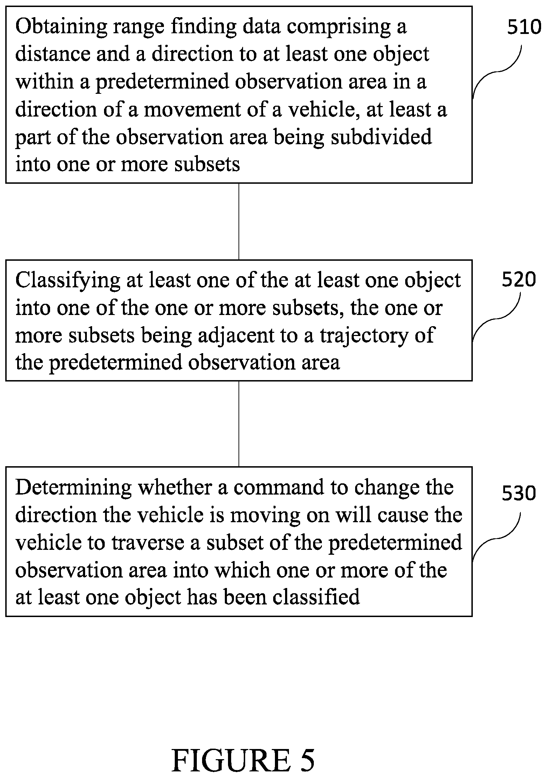

FIGURE 5 is a flow graph of a method in accordance with at least some embodiments. The phases of the illustrated method may be performed in the vehicle 110, a computing device of the vehicle 110 configured to control the functioning thereof, when installed therein. The phases of the illustrated method may alternatively be performed in the ground control station or server 150 separate from the vehicle, or in combination as discussed above in connection with FIGURE 4, for example.

Phase 510 comprises obtaining range finding data comprising a distance and a direction to at least one object within a predetermined observation area in a direction of movement of the vehicle 110, at least a part of the observation area being subdivided into plural subsets. Phase 520 comprises classifying at least one of the at least one detected object into one of the one or more of the subsets, the one or more subsets being adjacent to a trajectory of the vehicle. The central part of the observation area being centred about a velocity vector of the vehicle at a moment when the range finding data is obtained. Phase 530 comprises determining whether a command to change a direction the vehicle is moving on will cause the vehicle to traverse a subset of the predetermined observation area into which one or more of the at least one detected object has been classified.

In one implementation example of the method of FIGURE 5, when a vehicle communicates the detected objects to the external entity, a message relating to a detected object may comprise an alert ID of the detected object (object in trajectory or in subset, for example), a subset indication (left or right of vehicle, for example), a location of the vehicle when detected (a distance between the object and the vehicle), a speed of the vehicle, ID of the vehicle or a time stamp, or any combination thereof.

Another message regarding the object found in a trajectory may be generated. The message may comprise at least one or more an alert ID of the detected object, a trajectory indication, a location of the vehicle when detected, distance between the object and the vehicle, speed of the vehicle or time stamp, or any combination thereof.

The telemetry data of the vehicle, or parts thereof, is communicated also to the external entity.

If there are no findings in advance about the objects in the subsets, the usual guidance in case of a risk of collision may occur, i.e. no need to consider the objects in subsets.

However, if the message about the existence of the object in subset has been obtained before or during another object is detected in trajectory, the guidance needs to take care of the objects in the re-planning.

The alert ID of the detected object may be used for determining a next action in the re-planning, for example, a command to the vehicle, at least in part. The alert ID may comprise an indication (left, right, below or above, for example) of the subset of the detected object. In some examples, it may comprise whether or not the detected object is in a trajectory or outside a trajectory.

In further examples the detected objects may lie in different distances outside from the trajectory. In FIGURE 2D there could be another object or above-object (not shown) above the object 260, for example. In that case the object 260 is more important than the object-above, because the vehicle cannot use that segment in re-planning. The above-object may be omitted and not stored.

However, if the object 260 does not exist, for example in FIGURE 2D, the object-above is the object which need to be traversed in the segment (not shown) above the segment 220. The width of the above-segment 220 and the trajectory 210 may be the same, because if trajectory is safe then also segments with same width and without detected objects are safe to use. This will be the case with the below-segment 230 and other segments (left- and right-segments (not shown)). Then in some examples it is safe to use the segments 220, 230 as potential free space in re-planning, or control of the vehicle, if there is no object detected in those segments. If the above-object in this example is the only object and the above-segment 220 does not have the object then that part of the space can be used in re-planning, for example. This suites well to other segments like left, right, below, for example. The alert ID may comprise this kind additional indication of the detected object that above-segment 220 can be used but the segment (not shown) above the above-segment cannot be used and that may be handled as part of the vehicle management system and its functions, in re-planning, for example.

In some examples there might be a plurality of segments above each other like in layers. The segment layer is then used as identifier in addition to left, right, above, below segments, for example.

In some examples, a classifying session is started when detecting a first object in one or more subsets and/or in the trajectory. In some examples, this may occur automatically. An initial message with the first object data is sent from a control to an entity. A second object is detected and found to be in the trajectory. The next message with data of the second object is sent from the control to the entity. The data in the initial and next messages with vehicle telemetry data specifies the condition(s) for triggering a command to the vehicle. The command is sent from the entity and the vehicle receives it in its control. The vehicle starts executing the command accordingly. In some examples the first object is stored in a memory of the vehicle. When the second object is found to be in the trajectory, the first and second object data may be sent together to the server, the ground control station, or handled as part of the vehicle management system and its functions, for example.

The command may comprise one or more of the following: time and/or location to start, data of next waypoint, a new calculated waypoint, waypoints calculated for the re-planned path, a direction or subset to use to avoid the collision, an indication how to continue the path after subset to avoid collision, for example. They may be associated with a current plan to smoothly continue the path.

In some examples the sector-specific buffer, or memory may keep the passed object information longer than it has passed until next object is detected by range finding device, for example.

In some examples, the range finding device has detected that a distance between a new object and the closest object is short, and the objects are both classified to be in the same sector. In case the distance is short the location data of new object and closest object need to be stored. The storing may depend on the velocity of the vehicle, distance between new object and closest object, speed of processing or communication etc. In one example if the vehicle e.g. moves at 5 m/s, then the vehicle moves 300m in one minute. If the processing time is 3s then if the distance between the concerned objects is 10m then it is worth to have both object data stored in the memory, for example. But if the distance between concerned objects is e.g. 50m, only one i.e. data of closest object need to be stored before the location data of the new object will be stored.

In some examples the data of the classified object comprises a safety margin around the location information. This will help that the vehicle will not collide the classified object as sometimes the obtained data is not accurate, for example.

In some examples, the detected object is classified into predetermined trajectory segment or outside the predetermined trajectory segment. The detected object may be classified to one of the one or more subsets based on its location and direction within the observation area. When a direction the vehicle is moving on needs to change, the detected object in the particular subset in the observation area may be taken into account in further control of the vehicle.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in vehicular navigation.

## Claims

1. An apparatus (110, 300) comprising means (310, 320) for performing:
- obtaining (510) range finding data comprising a distance and a direction to at least two objects (120, 130, 130A, 260) within a predetermined observation area in a direction of a movement of a vehicle, at least a part of the observation area being subdivided into a trajectory segment (210), which the vehicle will traverse in case the direction of the vehicle is moving in does not change, and a plurality of further segments adjacent to the trajectory segment (210);
- classifying (520) the at least two objects (120, 130, 130A, 260) into at least one of the plurality of further segments (211, 212, 213, 214, 215, 216, 217), and
- determining (530) whether a command to change the direction the vehicle is moving on will cause the vehicle to traverse a segment of the further segments (211, 212, 213, 214, 215, 216, 217)into which one or more of the objects (120, 130, 130A, 260) has been classified,
**characterized in that**
the classifying (520) comprises classifying the objects (120, 130, 130A, 260) at two different distance ranges from the vehicle, the distance ranges comprising a nearer (210A) and a farther-away (210B) distance range as measured from the vehicle, such that at the farther-away distance range (210B), the trajectory segment (210)covers a smaller portion of the observation area than at the nearer distance range, **in that** the predetermined observation area being a field of view of a range finding device configured to obtain the range finding data, and **in that** the range finding device has beams getting farther from each other with increasing distance from the vehicle.

2. The apparatus (110, 300) of claim 1, wherein the means (310, 320) are further configured to perform classifying a first one of the at least two objects (120, 130, 130A, 260) into the trajectory segment (210)and to responsively provide an alert concerning a collision between the vehicle and the first one of the objects (120, 130, 130A, 260).

3. The apparatus (110, 300) of any of claims 1 - 2, wherein the range finding data is obtained using one or more of: a lidar, a radar, a sonar, a sodar or an ultrasonic device.

4. The apparatus (110, 300) of any of claims 1 - 3, wherein the means (310, 320) are further configured to perform discarding distance and direction information of the at least one object (120, 130, 130A, 260) classified into a subset of the observation area into which another object (120, 130, 130A, 260), closer to the vehicle, has been classified.

5. The apparatus (110, 300) of any of claims 1 - 4, wherein the means (310, 320) are further configured to perform: obtaining new range finding data at a frequency which is selected in dependence of a velocity at which the vehicle is moving.

6. The apparatus (110, 300) of any of claims 1 - 6, wherein the means (310, 320) are further configured to perform storing information on the at least one classified object (120, 130, 130A, 260) in a memory (320) until the vehicle has passed the respective object.

7. The apparatus (110, 300) of any of claims 1 - 6, wherein the means (310, 320) are further configured to perform storing information on a closest one of the classified objects (120, 130, 130A, 260) in the memory (320).

8. The apparatus (110, 300) of any of claims 1 - 7, wherein the means (310, 320) are further configured to perform: re-plan a planned path by using in a path calculation a closest one of the classified objects (120, 130, 130A, 260) stored in the memory (320) as an obstacle.

9. A method comprising:
- obtaining (510) range finding data comprising a distance and a direction to at least two objects (120, 130, 130A, 260) within a predetermined observation area in a direction of a movement of a vehicle, at least a part of the observation area being subdivided into a trajectory segment (210), which the vehicle will traverse in case the direction of the vehicle is moving in does not change, and a plurality of further segments (211, 212, 213, 214, 215, 216, 217) adjacent to the trajectory segment (210);
- classifying (520) the at least two objects (120, 130, 130A, 260) into at least one of the plurality of further segments (211, 212, 213, 214, 215, 216, 217), and
- determining (530) whether a command to change the direction the vehicle is moving on will cause the vehicle to traverse a segment of the further segments (211, 212, 213, 214, 215, 216, 217) into which one or more of the objects (120, 130, 130A, 260) has been classified,
**characterized in that**
- the classifying (520) comprises classifying the objects (120, 130, 130A, 260) at two different distance ranges from the vehicle, the distance ranges comprising a nearer and a farther-away distance range as measured from the vehicle, such that at the farther-away distance range, the trajectory segment (210) covers a smaller portion of the observation area than at the nearer distance range, **in that** the predetermined observation area being a field of view of a range finding device configured to obtain the range finding data, and **in that** the range finding device has beams getting farther from each other with increasing distance from the vehicle.

10. The method of claim 9, further comprising classifying a first one of the at least two objects (120, 130, 130A, 260) into the trajectory segment (210) and responsively providing an alert concerning a collision between the vehicle and the first one of the objects (120, 130, 130A, 260).

11. The method of any of claims 9 - 10, wherein the range finding data is obtained using one or more of: a lidar, a radar, a sonar, a sodar and an ultrasonic device.

12. The method of any of claims 9 - 11, further comprising providing location data of the one or more of the at least one object to a neighbour or an adjacent vehicle by using the sidelink communications.

13. A computer program configured to cause a method according to any one of claims 9 - 12 to be performed, when run.

## Patentansprüche

1. Einrichtung (110, 300), die Mittel (310, 320) zum Durchführen von Folgendem umfasst:
- Erhalten (510) von Entfernungsmessdaten, die einen Abstand und eine Richtung zu mindestens zwei Objekten (120, 130, 130A, 260) innerhalb eines vorbestimmten Beobachtungsbereichs in einer Richtung einer Bewegung eines Fahrzeugs umfassen, wobei mindestens ein Teil des Beobachtungsbereichs in ein Trajektoriensegment (210), das das Fahrzeug in einem Fall durchquert, in dem sich die Richtung, in die sich das Fahrzeug bewegt, nicht ändert, und eine Vielzahl von weiteren Segmenten, die dem Trajektoriensegment (210) benachbart sind, unterteilt ist;
- Klassifizieren (520) der mindestens zwei Objekte (120, 130, 130A, 260) in mindestens eines der Vielzahl von weiteren Segmenten (211, 212, 213, 214, 215, 216, 217), und
- Bestimmen (530), ob ein Befehl zum Ändern der Richtung, in die sich das Fahrzeug bewegt, das Fahrzeug veranlasst, ein Segment der weiteren Segmente (211, 212, 213, 214, 215, 216, 217) zu durchqueren, in die ein oder mehrere der Objekte (120, 130, 130A, 260) klassifiziert wurden,
**dadurch gekennzeichnet, dass**
das Klassifizieren (520) das Klassifizieren der Objekte (120, 130, 130A, 260) in zwei verschiedene Abstandsentfernungen vom Fahrzeug umfasst, wobei die Abstandsentfernungen eine nähere (210A) und eine weiter entferntere (210B) Abstandsentfernung umfassen, wie vom Fahrzeug gemessen, derart, dass in der weiter entfernteren Abstandsentfernung (210B) das Trajektoriensegment (210) einen kleineren Abschnitt des Beobachtungsbereichs abdeckt als in der näheren Abstandsentfernung, dass der vorbestimmte Beobachtungsbereich ein Sichtfeld einer Entfernungsmessvorrichtung ist, die dazu ausgelegt ist, die Entfernungsmessdaten zu erhalten, und dass die Entfernungsmessvorrichtung Strahlen aufweist, die sich mit zunehmendem Abstand vom Fahrzeug weiter voneinander entfernen.

2. Einrichtung (110, 300) nach Anspruch 1, wobei die Mittel (310, 320) ferner dazu ausgelegt sind, ein Klassifizieren eines ersten der mindestens zwei Objekte (120, 130, 130A, 260) in das Trajektoriensegment (210) durchzuführen und in Reaktion darauf einen Alarm bereitzustellen, der eine Kollision zwischen dem Fahrzeug und dem ersten der Objekte (120, 130, 130A, 260) betrifft.

3. Einrichtung (110, 300) nach einem der Ansprüche 1 bis 2, wobei die Entfernungsmessdaten unter Verwendung von einem von Folgendem erhalten werden: einem Lidar, einem Radar, einem Sonar, einem Sodar oder einer Ultraschallvorrichtung.

4. Einrichtung (110, 300) nach einem der Ansprüche 1 bis 3, wobei die Mittel (310, 320) ferner dazu ausgelegt sind, ein Verwerfen von Abstands- und Richtungsinformationen des mindestens einen Objekts (120, 130, 130A, 260) durchzuführen, das in einen Untersatz des Beobachtungsbereichs klassifiziert wurde, in den ein anderes Objekt (120, 130, 130A, 260) klassifiziert wurde, das dem Fahrzeug näher ist.

5. Einrichtung (110, 300) nach einem der Ansprüche 1 bis 4, wobei die Mittel (310, 320) ferner dazu ausgelegt sind, Folgendes durchzuführen: Erhalten von neuen Entfernungsmessdaten bei einer Frequenz, die in Abhängigkeit von einer Geschwindigkeit ausgewählt wird, mit der sich das Fahrzeug bewegt.

6. Einrichtung (110, 300) nach einem der Ansprüche 1 bis 6, wobei die Mittel (310, 320) ferner dazu ausgelegt sind, ein Speichern von Informationen über das mindestens eine klassifizierte Objekt (120, 130, 130A, 260) in einem Speicher (320) durchzuführen, bis das Fahrzeug das jeweilige Objekt passiert hat.

7. Einrichtung (110, 300) nach einem der Ansprüche 1 bis 6, wobei die Mittel (310, 320) ferner dazu ausgelegt sind, ein Speichern von Informationen über ein nächstes der klassifizierten Objekte (120, 130, 130A, 260) im Speicher (320) durchzuführen.

8. Einrichtung (110, 300) nach einem der Ansprüche 1 bis 7, wobei die Mittel (310, 320) ferner dazu ausgelegt sind, Folgendes durchzuführen: Neuplanen eines geplanten Pfades unter Verwendung eines im Speicher (320) gespeicherten nächsten der klassifizierten Objekte (120, 130, 130A, 260) in einer Pfadberechnung als ein Hindernis.

9. Verfahren, das Folgendes umfasst:
- Erhalten (510) von Entfernungsmessdaten, die einen Abstand und eine Richtung zu mindestens zwei Objekten (120, 130, 130A, 260) innerhalb eines vorbestimmten Beobachtungsbereichs in einer Richtung einer Bewegung eines Fahrzeugs umfassen, wobei mindestens ein Teil des Beobachtungsbereichs in ein Trajektoriensegment (210), das das Fahrzeug in einem Fall durchquert, in dem sich die Richtung, in die sich das Fahrzeug bewegt, nicht ändert, und eine Vielzahl von weiteren Segmenten (211, 212, 213, 214, 215, 216, 217), die dem Trajektoriensegment (210) benachbart sind, unterteilt ist;
- Klassifizieren (520) der mindestens zwei Objekte (120, 130, 130A, 260) in mindestens eines der Vielzahl von weiteren Segmenten (211, 212, 213, 214, 215, 216, 217), und
- Bestimmen (530), ob ein Befehl zum Ändern der Richtung, in die sich das Fahrzeug bewegt, das Fahrzeug veranlasst, ein Segment der weiteren Segmente (211, 212, 213, 214, 215, 216, 217), in die ein oder mehrere der Objekte (120, 130, 130A, 260) klassifiziert wurden, zu durchqueren,
**dadurch gekennzeichnet, dass**
- das Klassifizieren (520) das Klassifizieren der Objekte (120, 130, 130A, 260) in zwei verschiedene Abstandsentfernungen vom Fahrzeug umfasst, wobei die Abstandsentfernungen eine nähere und eine weiter entferntere Abstandsentfernung umfassen, wie vom Fahrzeug gemessen, derart, dass in der weiter entfernteren Abstandsentfernung das Trajektoriensegment (210) einen kleineren Abschnitt des Beobachtungsbereichs abdeckt als in der näheren Abstandsentfernung, dass der vorbestimmte Beobachtungsbereich ein Sichtfeld einer Entfernungsmessvorrichtung ist, die dazu ausgelegt ist, die Entfernungsmessdaten zu erhalten, und dass die Entfernungsmessvorrichtung Strahlen aufweist, die sich mit zunehmendem Abstand vom Fahrzeug weiter voneinander entfernen.

10. Verfahren nach Anspruch 9, das ferner das Klassifizieren eines ersten der mindestens zwei Objekte (120, 130, 130A, 260) in das Trajektoriensegment (210) und in Reaktion darauf das Bereitstellen eines Alarms umfasst, der eine Kollision zwischen dem Fahrzeug und dem ersten der Objekte (120, 130, 130A, 260) betrifft.

11. Verfahren nach einem der Ansprüche 9 bis 10, wobei die Entfernungsmessdaten unter Verwendung von einem von Folgendem erhalten werden: einem Lidar, einem Radar, einem Sonar, einem Sodar und einer Ultraschallvorrichtung.

12. Verfahren nach einem der Ansprüche 9 bis 11, das ferner das Bereitstellen von Standortdaten des einen oder der mehreren des mindestens einen Objekts für ein benachbartes oder angrenzendes Fahrzeug unter Verwendung der Sidelinkkommunikation umfasst.

13. Computerprogramm, das dazu ausgelegt ist zu veranlassen, dass ein Verfahren nach einem der Ansprüche 9 bis 12 durchgeführt wird.

## Revendications

1. Appareil (110, 300) comprenant des moyens (310, 320) pour :
- obtenir (510) des données de télémétrie comprenant une distance et une direction par rapport à au moins deux objets (120, 130, 130A, 260) dans une zone d'observation prédéterminée dans une direction de déplacement d'un véhicule, au moins une partie de la zone d'observation étant subdivisée en un segment de trajectoire (210) que le véhicule traversera si la direction dans laquelle il se déplace ne change pas, et une pluralité de segments supplémentaires adjacents au segment de trajectoire (210) ;
- classer (520) les au moins deux objets (120, 130, 130A, 260) dans au moins l'un de la pluralité de segments supplémentaires (211, 212, 213, 214, 215, 216, 217), et
- déterminer (530) si une instruction de changement de la direction de déplacement du véhicule amènera le véhicule à traverser un segment des segments supplémentaires (211, 212, 213, 214, 215, 216, 217) où un ou plusieurs des objets (120, 130, 130A, 260) ont été classés,
**caractérisé en ce que**
le classement (520) comprend le classement des objets (120, 130, 130A, 260) sur deux plages de distances différentes du véhicule, les plages de distances comprenant une plage de distance plus proche (210A) et une plage de distance plus éloignée (210B) mesurées à partir du véhicule, de sorte que dans la plage de distance plus éloignée (210B), le segment de trajectoire (210) couvre une plus petite partie de la zone d'observation que dans la plage de distance plus proche, **en ce que** la zone d'observation prédéterminée est un champ de vision d'un dispositif de télémétrie configuré pour obtenir les données de télémétrie, et **en ce que** le dispositif de télémétrie a des faisceaux qui s'éloignent les uns des autres à mesure que la distance par rapport au véhicule s'accroît.

2. Appareil (110, 300) selon la revendication 1, dans lequel les moyens (310, 320) sont en outre configurés pour classer un premier objet des au moins deux objets (120, 130, 130A, 260) dans le segment de trajectoire (210), et pour fournir de manière réactive une alerte concernant une collision entre le véhicule et le premier objet des objets (120, 130, 130A, 260) .

3. Appareil (110, 300) selon l'une des revendications 1 et 2, dans lequel les données de télémétrie sont obtenues à l'aide d'un ou plusieurs parmi : un lidar, un radar, un sonar, un sodar ou un dispositif à ultrasons.

4. Appareil (110, 300) selon l'une des revendications 1 à 3, dans lequel les moyens (310, 320) sont en outre configurés pour écarter les informations de distance et de direction de l'au moins un objet (120, 130, 130A, 260) classé dans un sous-ensemble de la zone d'observation où un autre objet (120, 130, 130A, 260) plus proche du véhicule a été classé.

5. Appareil (110, 300) selon l'une des revendications 1 à 4, dans lequel les moyens (310, 320) sont en outre configurés pour : obtenir de nouvelles données de télémétrie à une fréquence sélectionnée en fonction de la vitesse à laquelle le véhicule se déplace.

6. Appareil (110, 300) selon l'une des revendications 1 à 6, dans lequel les moyens (310, 320) sont en outre configurés pour stocker des informations sur l'au moins un objet (120, 130, 130A, 260) classé dans une mémoire (320) jusqu'à ce que le véhicule ait dépassé l'objet respectif.

7. Appareil (110, 300) selon l'une des revendications 1 à 6, dans lequel les moyens (310, 320) sont en outre configurés pour stocker des informations sur l'objet le plus proche des objets (120, 130, 130A, 260) classés dans la mémoire (320).

8. Appareil (110, 300) selon l'une des revendications 1 à 7, dans lequel les moyens (310, 320) sont en outre configurés pour : replanifier une trajectoire planifiée en utilisant, dans un calcul de trajectoire, l'objet le plus proche des objets (120, 130, 130A, 260) classés stocké dans la mémoire (320) comme obstacle.

9. Procédé comprenant les étapes suivantes :
- obtenir (510) des données de télémétrie comprenant une distance et une direction par rapport à au moins deux objets (120, 130, 130A, 260) dans une zone d'observation prédéterminée dans une direction de déplacement d'un véhicule, au moins une partie de la zone d'observation étant subdivisée en un segment de trajectoire (210) que le véhicule traversera si la direction dans laquelle il se déplace ne change pas, et une pluralité de segments supplémentaires (211, 212, 213, 214, 215, 216, 217) adjacents au segment de trajectoire (210) ;
- classer (520) les au moins deux objets (120, 130, 130A, 260) dans au moins l'un de la pluralité de segments supplémentaires (211, 212, 213, 214, 215, 216, 217), et
- déterminer (530) si une instruction de changement de la direction de déplacement du véhicule amènera le véhicule à traverser un segment des segments supplémentaires (211, 212, 213, 214, 215, 216, 217) où un ou plusieurs des objets (120, 130, 130A, 260) ont été classés,
**caractérisé en ce que**
- le classement (520) comprend le classement des objets (120, 130, 130A, 260) sur deux plages de distances différentes du véhicule, les plages de distances comprenant une plage de distance plus proche et une plage de distance plus éloignée mesurées à partir du véhicule, de sorte que dans la plage de distance plus éloignée, le segment de trajectoire (210) couvre une plus petite partie de la zone d'observation que dans la plage de distance plus proche, **en ce que** la zone d'observation prédéterminée est un champ de vision d'un dispositif de télémétrie configuré pour obtenir les données de télémétrie, et **en ce que** le dispositif de télémétrie a des faisceaux qui s'éloignent les uns des autres à mesure que la distance par rapport au véhicule s'accroît.

10. Procédé selon la revendication 9, comprenant en outre le classement d'un premier objet des au moins deux objets (120, 130, 130A, 260) dans le segment de trajectoire (210) et la fourniture réactive d'une alerte concernant une collision entre le véhicule et le premier objet des objets (120, 130, 130A, 260) .

11. Procédé selon l'une des revendications 9 et 10, dans lequel les données de télémétrie sont obtenues à l'aide d'un ou plusieurs parmi : un lidar, un radar, un sonar, un sodar et un dispositif à ultrasons.

12. Procédé selon l'une des revendications 9 à 11, comprenant en outre la fourniture de données de localisation d'un ou plusieurs du ou des objets à un voisin ou à un véhicule adjacent en utilisant les communications par liaison latérale.

13. Programme informatique configuré pour provoquer la mise en œuvre d'un procédé selon l'une des revendications 9 à 12, lorsqu'il est exécuté.
